# EUROPEAN PATENT APPLICATION

(11) **EP 4 425 628 A1**
(43) Date of publication of application: **04.09.2024**
(21) Application number: 22886917.8
(22) Date of filing: 21.10.2022
(51) Int. Cl.: H01M 10/052, H01M 4/131, H01M 4/134, H01M 4/38, H01M 4/505, H01M 4/525, H01M 4/66, H01M 10/0562, H01M 10/0566

(54) **BATTERY**

(30) Priority: 28.10.2021 JP 2021176989
(71) Applicant: Panasonic Intellectual Property Management Co., Ltd., Kadoma-shi, Osaka 571-0057 (JP)
(72) Inventor: OTO, Takashi, Kadoma-shi, Osaka 571-0057 (JP); FUJIMOTO, Masahisa, Kadoma-shi, Osaka 571-0057 (JP)
(74) Representative: Novagraaf International SA
(86) International application number: PCT/JP2022/039397
(87) International publication number: WO 2023/074590

(57) **Abstract**

A battery 1000 according to the present disclosure includes a positive electrode 103, a negative electrode 101, and an electrolyte layer 102 positioned between the positive electrode 103 and the negative electrode 101. The positive electrode 103 includes a positive electrode active material layer 106. The positive electrode active material layer 106 includes a composite oxide represented by composition formula (1): LiₐNi_{b}Me_{c}O_{2d}. In the composition formula (1), a satisfies 0.8 ≤ a ≤ 1.2, b satisfies 0.5 ≤ b ≤ 1.0, c satisfies 0 ≤ c ≤ 0.6, d satisfies 0 < d, and Me is at least one selected from the group consisting of Mn, Co, and Al. The negative electrode 101 includes a negative electrode current collector 100 and a negative electrode active material layer 104. The negative electrode active material layer 104 includes an alloy, and the alloy includes Bi and Ni.

## Description

### TECHNICAL FIELD

The present disclosure relates to a battery.

### BACKGROUND ART

Lithium secondary batteries, which have been actively researched and developed in recent years, have battery characteristics greatly affected by the electrodes used therein, such as gravimetric energy density, volumetric energy density, charge and discharge voltage, charge and discharge cycle life characteristics, and storage characteristics. Thus, attempts have been made to enhance the battery characteristics by modifying the electrode active materials.

For example, proposals have been made from the early days for lithium secondary batteries using, as the electrodes, aluminum, silicon, tin, or the like that is electrochemically alloyed with lithium during charge. Patent Literature 1 discloses a lithium secondary battery including: a negative electrode including a negative electrode material consisting of an alloy including silicon, tin, and a transition metal; a positive electrode; and an electrolyte.

Patent Literature 2 discloses a lithium secondary battery including: a negative electrode using, as the active material, a silicon thin film formed on a current collector; a positive electrode; and an electrolyte.

Another example of the metal that can be alloyed with lithium is bismuth (Bi). Non Patent Literature 1 discloses a negative electrode produced by using a Bi powder in which Bi is included as the negative electrode active material.

### CITATION LIST

### Patent Literature

Patent Literature 1: JP 4898737 B
Patent Literature 2: JP 3733065 B

### Non Patent Literature

Non Patent Literature 1: YAMAGUCHI Hiroyuki, "Amorphous Polymeric Anode Materials from Poly(acrylic acid) and Metal Oxide for Lithium Ion Batteries", Doctoral dissertation, Mie University, 2015

### SUMMARY OF INVENTION

### Technical Problem

The present disclosure provides a battery having a structure suitable for enhancing the volumetric energy density.

### Solution to Problem

A battery of the present disclosure includes:
a positive electrode;
a negative electrode; and
an electrolyte layer positioned between the positive electrode and the negative electrode, wherein
the positive electrode includes a positive electrode active material layer,
the positive electrode active material layer includes a composite oxide represented by the following composition formula (1):

   LiₐNi_{b}Me_{c}O_{2d} (1)
in the composition formula (1),
   a satisfies 0.8 ≤ a ≤ 1.2,
   b satisfies 0.5 ≤ b ≤ 1.0,
   c satisfies 0 ≤ c ≤ 0.6,
   d satisfies 0 < d, and
   Me is at least one selected from the group consisting of Mn, Co, and Al,
the negative electrode includes a negative electrode current collector and a negative electrode active material layer, and
the negative electrode active material layer includes an alloy, the alloy including Bi and Ni.

### Advantageous Effects of Invention

According to the present disclosure, it is possible to provide a battery having a structure suitable for enhancing the volumetric energy density.

### BRIEF DESCRIPTION OF DRAWINGS

FIG. 1 is a cross-sectional view schematically showing a configuration example of a battery according to an embodiment of the present disclosure.
FIG. 2 is a graph showing an example of the X-ray diffraction pattern of a negative electrode active material layer constituted of a BiNi thin film formed on a nickel foil.
FIG. 3 is a partially enlarged cross-sectional view schematically showing a modification of the negative electrode of the battery according to the embodiment of the present disclosure.
FIG. 4 is a cross-sectional view schematically showing a modification of the battery according to the embodiment of the present disclosure.
FIG. 5 is a graph of the results of a charge and discharge test on a test cell according to Example 1, showing the voltage during discharge and the discharge capacity per unit mass of the positive electrode active material.
FIG. 6 is a graph of the results of a charge and discharge test on a test cell according to Example 2, showing the voltage during discharge and the discharge capacity per unit mass of the positive electrode active material.
FIG. 7 is a graph of the results of a charge and discharge test on a test cell according to Example 3, showing the voltage during discharge and the discharge capacity per unit mass of the positive electrode active material.
FIG. 8 is a graph of the results of a charge and discharge test on a test cell according to Reference Example 1, showing the voltage during discharge and the discharge capacity per unit mass of the positive electrode active material.
FIG. 9 is a graph of the results of a charge and discharge test on a test cell according to Example 4, showing the voltage during discharge and the discharge capacity per unit mass of the positive electrode active material.
FIG. 10 is a graph of the results of a charge and discharge test on a test cell according to Example 5, showing the voltage during discharge and the discharge capacity per unit mass of the positive electrode active material.
FIG. 11 is a graph of the results of a charge and discharge test on a test cell according to Example 6, showing the voltage during discharge and the discharge capacity per unit mass of the positive electrode active material.
FIG. 12 is a graph of the results of a charge and discharge test on a test cell according to Example 7, showing the voltage during discharge and the discharge capacity per unit mass of the positive electrode active material.
FIG. 13 is a graph of the results of a charge and discharge test on a test cell according to Reference Example 2, showing the voltage during discharge and the discharge capacity per unit mass of the positive electrode active material.

### DESCRIPTION OF EMBODIMENT

### (Findings underlying the present disclosure)

As described in BACKGROUND ART section, attempts have been made to enhance the battery characteristics of lithium secondary batteries by modifying the electrode active materials.

Using lithium metal as the negative electrode active material can obtain a lithium secondary battery having a high energy density both per weight and per volume. However, in a lithium secondary battery having such a configuration, lithium is deposited in the form of dendrites during charge. The lithium metal deposited partially reacts with the electrolyte solution, causing a low charge and discharge efficiency and thus poor cycle characteristics.

To address this issue, using carbon, particularly graphite, as the negative electrode has been proposed. In a negative electrode using carbon, charge and discharge occur by lithium intercalation into and deintercalation from carbon. In a negative electrode having such a configuration, the charge and discharge mechanism causes no deposition of lithium metal in the form of dendrites. In addition, a lithium secondary battery employing a negative electrode having such a configuration involves topotactic reactions and thus is extremely excellent in reversibility, exhibiting nearly 100% charge and discharge efficiency. For these reasons, lithium secondary batteries employing negative electrodes using carbon, particularly graphite, have been put to practical use. However, graphite has a theoretical capacity density of 372 mAh/g, which is about one-tenth of the theoretical capacity density of lithium metal, 3884 mAh/g. Consequently, in negative electrodes using graphite, the active material has a low capacity density. Furthermore, since the actual capacity density of graphite has almost reached the theoretical capacity density of graphite, the capacity increase of negative electrodes using graphite has been pushed to the limit.

To address these, proposals have been made from the early days for lithium secondary batteries using, as the electrodes, aluminum, silicon, tin, or the like that is electrochemically alloyed with lithium during charge. The metal to be alloyed with lithium has a considerably higher capacity density than graphite has. Silicon particularly has a high theoretical capacity density. Thus, electrodes using aluminum, silicon, tin, or the like that can be alloyed with lithium are promising as high-capacity negative electrodes for batteries, and various types of secondary batteries using such negative electrodes have been proposed (Patent Literature 1).

However, a negative electrode using a metal such as the above that can be alloyed with lithium expands upon occluding lithium and contracts upon releasing lithium. Repeating such expansion and contraction during charge and discharge causes pulverization of the alloy itself serving as the electrode active material caused by the charge and discharge, deteriorating the current collection characteristics of the negative electrode. Consequently, sufficient cycle characteristics have not been exhibited. To address such a drawback, several experiments as below have been made. According to one experiment, for example, on a current collector having a roughened surface, silicon is deposited by sputtering or vapor deposition or tin is deposited by electroplating (Patent Literature 2). In this experiment, the active material, namely, the metal that can be alloyed with lithium, in the form of a thin film, adheres to the current collector, causing little degradation in current collection characteristics despite repeated expansion and contraction of the negative electrode caused by lithium occlusion and release.

However, forming an active material by sputtering or vapor deposition as above results in high manufacturing costs, making this approach impractical. Although forming an active material by electroplating, which is less costly in manufacturing, is practical, silicon is extremely difficult to use for electroplating. Moreover, tin, which is easy to use for electroplating, has an issue of a poor flatness of discharge voltage and thus difficulty in using as the battery electrode.

Another example of the metal that can be alloyed with lithium is bismuth (Bi). Bi, together with lithium (Li), forms compounds LiBi and Li₃Bi. LiBi and Li₃Bi have almost no difference in potential. In contrast, tin, which has a poor flatness of discharge voltage, forms several compounds together with lithium. These compounds considerably differ in potential from each other. In other words, unlike tin, Bi does not have properties of forming, together with lithium, multiple compounds that greatly differ in potential from each other. For this reason, an electrode including Bi as the active material has a flat potential and thus is excellent in flatness of discharge voltage. Thus, an electrode including Bi as the active material is considered to be suitable as the battery electrode.

However, Bi, which is poor in malleability and ductility, has difficulty in manufacturing in the form of a metal plate or metal foil, and consequently can be obtained in the form of a pellet or powder. Thus, studies on an electrode including Bi as the active material have focused on an electrode manufactured by applying a Bi powder to a current collector. However, such an electrode manufactured by using a Bi powder undergoes pulverization caused by repeated charge and discharge, deteriorating the current collection characteristics. Consequently, sufficient cycle characteristics have not been exhibited. For example, Non Patent Literature 1 discloses production of an electrode including Bi as the active material in which a Bi powder is used and polyvinylidene fluoride (PVdF) or polyimide (PI) is used as the binder. In Non Patent Literature 1, a battery produced by using the above electrode is charged and discharged. However, the electrode produced exhibits extremely poor results in both the initial charge and discharge curves and the cycle characteristics. Although measured at a considerably low rate equivalent to 0.042 IT, the battery exhibits a low initial charge and discharge efficiency and a severe cycle degradation in addition, and is accordingly not suitable for practical use. Regarding this cycle degradation, Non Patent Literature 1 points out as follows: as the Bi active material expands during Li intercalation and contracts during Li deintercalation, the active material becomes pulverized, presumably causing no more formation of the electron conduction paths and thus causing a capacity decrease.

The present inventors have focused on Bi, which, as described above, does not have properties of forming, together with Li, multiple compounds greatly different in potential and thus is excellent in flatness of discharge voltage, and the present inventors have conducted earnest studies on a battery that can have improved cycle characteristics. As a result, the present inventors have arrived at a novel technical idea that using an alloy including Bi and Ni as the active material improves the cycle characteristics of the battery.

The present inventors have conducted further detailed studies on a battery in which an alloy including Bi and Ni is used as the active material. Specifically, the studies have been conducted on the selection of an appropriate positive electrode material in using an alloy including Bi and Ni as the negative electrode active material.

Examples of positive electrode materials that have been under active research and development include layered lithium metal composite oxides and spinel-type lithium metal composite oxides. A lithium-ion secondary battery using such a lithium metal composite oxide as the positive electrode material can achieve a high voltage in the 4-V class. Thus, lithium-ion secondary batteries using lithium metal composite oxides as the positive electrode materials have been increasingly put to practical use as batteries having a high energy density.

Lithium composite oxides currently proposed as positive electrode materials for lithium-ion secondary batteries such as the above include lithium-cobalt composite oxide (LiCoO₂), which is relatively easy to synthesize, lithium-nickel composite oxide (LiNiO₂) using nickel, which is less expensive than cobalt, lithium-nickel-manganese composite oxide (LiNi_{0.5}Mn_{0.5}O₂), lithium-manganese composite oxide (LiMn₂O₄) using manganese, lithium-nickel-cobalt-manganese composite oxide (LiNi_{1/3}Co_{1/3}Mn_{1/3}O₂), and lithium-nickel-cobalt-aluminum composite oxide (LiNi_{1/3}Co_{1/3}Al_{1/3}O₂).

As a result of earnest studies, the present inventors have found that in cell formation by using an electrode including an alloy including Bi and Ni as the negative electrode active material, a positive electrode including a particular positive electrode active material is used, so that volumetric energy density can be enhanced. The present inventors thus have completed the present disclosure.

### (Outline of one aspect according to the present disclosure)

A battery according to a first aspect of the present disclosure includes:
a positive electrode;
a negative electrode; and
an electrolyte layer positioned between the positive electrode and the negative electrode, wherein
the positive electrode includes a positive electrode active material layer,
the positive electrode active material layer includes a composite oxide represented by the following composition formula (1):

   LiₐNi_{b}Me_{c}O_{2d} (1)
in the composition formula (1),
   a satisfies 0.8 ≤ a ≤ 1.2,
   b satisfies 0.5 ≤ b ≤ 1.0,
   c satisfies 0 ≤ c ≤ 0.6,
   d satisfies 0 < d, and
   Me is at least one selected from the group consisting of Mn, Co, and Al,
the negative electrode includes a negative electrode current collector and a negative electrode active material layer, and
the negative electrode active material layer includes an alloy, the alloy including Bi and Ni.

The battery according to the first aspect can have an enhanced volumetric energy density by including: the negative electrode active material layer including the alloy including Bi and Ni; and the positive electrode active material layer including the composite oxide represented by the composition formula (1). In other words, the battery according to the first aspect has a structure suitable for enhancing the volumetric energy density.

In a second aspect of the present disclosure, for example, the battery according to the first aspect may be such that the active material layer includes BiNi.

The battery according to the second aspect can have a further enhanced volumetric energy density.

In a third aspect of the present disclosure, for example, the battery according to the second aspect may be such that the negative electrode active material layer includes the BiNi as a main component of an active material.

The battery according to the third aspect can have a further enhanced volumetric energy density.

In a fourth aspect of the present disclosure, for example, the battery according to the second or third aspect may be such that the BiNi has a monoclinic crystal structure of space group C2/m.

The battery according to the fourth aspect can have improved cycle characteristics in addition to an enhanced volumetric energy density.

In a fifth aspect of the present disclosure, for example, the battery according to any one of the first to fourth aspects may be such that the active material layer includes at least one selected from the group consisting of LiBi and Li₃Bi.

The battery according to the fifth aspect can have a further enhanced volumetric energy density.

In a sixth aspect of the present disclosure, for example, the battery according to any one of the first to fifth aspects may be such that the negative electrode active material layer is free of a solid electrolyte.

The battery according to the sixth aspect can have a further enhanced volumetric energy density.

In a seventh aspect of the present disclosure, for example, the battery according to any one of the first to sixth aspects may be such that in an X-ray diffraction pattern of the negative electrode active material layer obtained by surface X-ray diffractometry using Cu-Kα radiation,
when a height intensity of a maximum peak present in a diffraction angle 2θ range from 29° to 31° is represented by I(1) and a height intensity of a maximum peak present in a diffraction angle 2θ range from 41° to 43° is represented by I(2),
a ratio I(2)/I(1) of the I(2) to the I(1) is 0.28 or less.

The battery according to the seventh aspect can have further improved cycle characteristics and a further enhanced capacity in addition to an enhanced volumetric energy density.

In an eighth aspect of the present disclosure, for example, the battery according to any one of the first to seventh aspects may be such that the negative electrode current collector includes at least one selected from the group consisting of Cu and Ni.

The battery according to the eighth aspect can have a further enhanced volumetric energy density.

In a ninth aspect of the present disclosure, for example, the battery according to any one of the first to eighth aspects may be such that the negative electrode active material layer is a heat-treated plating layer.

The battery according to the ninth aspect can have a further enhanced volumetric energy density.

In a tenth aspect of the present disclosure, for example, the battery according to any one of the first to ninth aspects may be such that the electrolyte layer is a solid electrolyte layer.

The battery according to the tenth aspect can have a further enhanced volumetric energy density when configured as a solid-state battery.

In an eleventh aspect of the present disclosure, for example, the battery according to the tenth aspect may be such that the solid electrolyte layer includes a halide solid electrolyte, and the halide solid electrolyte is free of sulfur.

The battery according to the eleventh aspect can have a further enhanced volumetric energy density when configured as a solid-state battery.

In a twelfth aspect of the present disclosure, for example, the battery according to the tenth aspect may be such that the solid electrolyte layer includes a sulfide solid electrolyte.

The battery according to the twelfth aspect can have a further enhanced volumetric energy density when configured as a solid-state battery.

In a thirteenth aspect of the present disclosure, for example, the battery according to any one of the first to ninth aspects may be such that the electrolyte layer includes an electrolyte solution.

The battery according to the thirteenth aspect can have a further enhanced volumetric energy density when configured as a flooded battery.

In a fourteenth aspect of the present disclosure, for example, the battery according to any one of the first to thirteenth aspects may be such that in the composition formula (1), d satisfies 0.8 ≤ d ≤ 1.2.

The battery according to the fourteenth aspect can have an enhanced volumetric energy density by including: the negative electrode active material layer including the alloy including Bi and Ni; and the positive electrode active material layer including the composite oxide represented by the composition formula (1).

### (Embodiment of the present disclosure)

An embodiment of the present disclosure will be described below with reference to the drawings. The following descriptions are each a generic or specific example. The numerical values, composition, shape, film thickness, electrical characteristics, secondary battery structure, etc., shown below are illustrative only, and are not intended to limit the present disclosure.

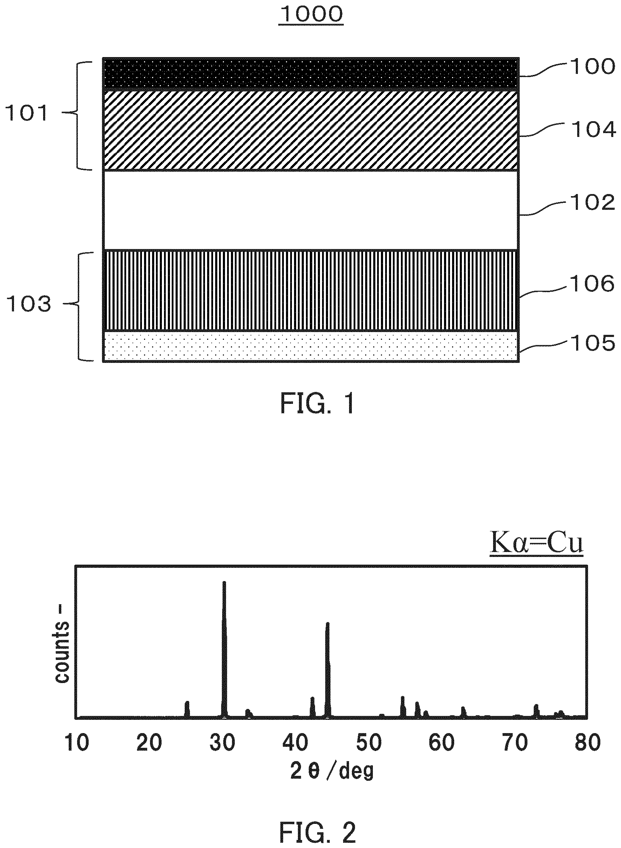

FIG. 1 is a cross-sectional view schematically showing a configuration example of a battery 1000 according to the embodiment of the present disclosure.

The battery 1000 includes a negative electrode 101, a positive electrode 103, and an electrolyte layer 102 positioned between the negative electrode 101 and the positive electrode 103.

The negative electrode 101 includes a negative electrode current collector 100 and a negative electrode active material layer 104. The negative electrode active material layer 104 is positioned between the negative electrode current collector 100 and the electrolyte layer 102. The negative electrode active material layer 104 includes an alloy, and the alloy includes Bi and Ni.

The positive electrode 103 includes a positive electrode active material layer 106. The positive electrode active material layer 106 includes a composite oxide represented by the following composition formula (1):

LiₐNi_{b}Me_{c}O_{2d} (1)

in the composition formula (1),
a satisfies 0.8 ≤ a ≤ 1.2,
b satisfies 0.5 ≤ b ≤ 1.0,
c satisfies 0 ≤ c ≤ 0.6,
d satisfies 0 < d, and
Me is at least one selected from the group consisting of Mn, Co, and Al.

The composition of the composite oxide included in the positive electrode active material layer 106 can be determined by, for example, inductively coupled plasma emission spectrometry and inert gas fusion-infrared absorptiometry. For example, the composition of Li, Ni, and Me can be determined by inductively coupled plasma emission spectrometry, and the composition of O can be determined by inert gas fusion-infrared absorptiometry.

As shown in FIG. 1, the positive electrode 103 may include a positive electrode current collector 105 in contact with the positive electrode active material layer 106. In the case where the positive electrode current collector 105 is provided, it is possible to collect electricity from the battery 1000 with a high efficiency.

In the battery 1000, the electrolyte layer 102 is a solid electrolyte layer. Accordingly, although charge and discharge cause repeated expansion and contraction of the negative electrode active material layer 104 including the alloy including Bi and Ni as the negative electrode active material, the electrolyte is prevented from entering the negative electrode active material layer 104. This suppresses a decrease in the electron conduction paths in the negative electrode active material layer 104 caused by repeated charge and discharge. Accordingly, the battery 1000 is less prone to degradation in the current collection characteristics of the negative electrode active material layer 104 caused by charge and discharge, and therefore can have favorable cycle characteristics.

The battery 1000 is, for example, a lithium secondary battery. The following describes an example case where the metal ions that are occluded and released by the negative electrode active material layer 104 of the negative electrode 101 and the positive electrode active material layer 106 of the positive electrode 103 during charge and discharge of the battery 1000 are lithium ions.

The negative electrode active material layer 104 includes, as the alloy including Bi and Ni, for example, BiNi. The negative electrode active material layer 104 may include BiNi as the main component. Here, the phrase "the negative electrode active material layer 104 includes BiNi as the main component" is defined as meaning that "the content of BiNi in the negative electrode active material layer 104 is 50 mass% or more". The content of BiNi in the negative electrode active material layer 104 can be determined by, for example: performing elemental analysis by energy dispersive X-ray spectroscopy (EDX) to confirm that Bi and Ni are included in the negative electrode active material layer 104; and performing Rietveld analysis on the X-ray diffraction results for the negative electrode active material layer 104 to calculate the ratio between the compounds included therein.

With the above configuration, it is possible to further enhance the volumetric energy density.

BiNi included in the negative electrode active material layer 104 may have a monoclinic crystal structure of space group C2/m.

With the above configuration, it is possible to achieve improved cycle characteristics of the battery in addition to an enhanced volumetric energy density.

The negative electrode active material layer 104 including BiNi as the main component may be constituted of, for example, BiNi in the form of a thin film (hereinafter referred to as a "BiNi thin film").

In the X-ray diffraction pattern of the negative electrode active material layer 104 obtained by surface X-ray diffractometry using Cu-Kα radiation, when the height intensity of the maximum peak present in a diffraction angle 2θ range from 29° to 31 ° is represented by I(1) and the height intensity of the maximum peak present in a diffraction angle 2θ range from 41° to 43° is represented by I(2), the ratio I(2)/I(1) of the I(2) to the I(1) may be 0.28 or less.

In the X-ray diffraction pattern, the maximum peak present in the diffraction angle 2θ range from 29° to 31° corresponds to a peak derived from the (2,2,1) plane of BiNi, which is an intermetallic compound. Furthermore, in the X-ray diffraction pattern, the maximum peak present in the diffraction angle 2θ range from 41° to 43° corresponds to a peak derived from the (2,2,3) plane of the intermetallic compound BiNi. The peak intensity ratio I(2)/I(1) of 0.28 or less indicates that the active material layer 104 has a surface with a low ratio of the (2,2,3) plane to the (2,2,1) plane of BiNi having a monoclinic crystal structure of space group C2/m. In other words, it is indicated that the negative electrode active material layer 104 has a surface with a higher orientation of the (2,2,1) plane. The active material layer 104 having a surface with such an orientation in the crystal structure of BiNi can have a high adhesion to the negative electrode current collector 100. Accordingly, in the case where the negative electrode active material layer 104 having such a surface orientation, the negative electrode active material layer 104 is less prone to degradation in current collection characteristics despite its repeated expansion and contraction caused by charge and discharge. Therefore, the battery 1000 of the present disclosure can have further improved cycle characteristics and a further enhanced capacity in addition to an enhanced volumetric energy density.

The X-ray diffraction pattern of the active material layer 104 can be obtained by θ-2θ X-ray diffractometry using Cu-Kα radiation having wavelengths of 1.5405 Å and 1.5444 Å, that is, wavelengths of 0.15405 nm and 0.15444 nm.

The diffraction angle of a peak in the X-ray diffraction pattern is defined as an angle at which the maximum intensity is exhibited for a projecting portion having an SN ratio (that is, the ratio of a signal S to a background noise N) of 1.3 or more and a half width of 10° or less. The half width refers to a width indicated by the difference between two diffraction angles at which the intensity of the X-ray diffraction peak is half of a maximum intensity I_{MAX} of the X-ray diffraction peak.

The negative electrode active material layer 104 constituted of a BiNi thin film including BiNi as the main component and satisfying the above surface orientation can be produced by, for example, electroplating. The manufacturing method for the negative electrode 101 by producing the negative electrode active material layer 104 by electroplating is, for example, as follows.

First, a substrate for electroplating is prepared. In the negative electrode 101, the negative electrode current collector 100 serves as the substrate, for example. The negative electrode current collector 100 prepared is, for example, a current collector including Ni. The method for manufacturing the negative electrode 101 includes, for example:
forming a Bi plating layer on a current collector including Ni by electroplating; and
heating the current collector and the Bi plating layer to diffuse Ni included in the current collector into the Bi plating layer and thus to obtain an electrode in which an active material layer including BiNi is formed on the current collector. The heating temperature for the Bi plating layer is, for example, 250°C or higher, and may be 350°C or higher.

The method for manufacturing the negative electrode 101 will now be described in more detail.

First, a substrate for electroplating is prepared. In the negative electrode 101, the negative electrode current collector 100 serves as the substrate, for example. The negative electrode current collector 100 prepared is, for example, a nickel foil. The nickel foil is preliminarily degreased with an organic solvent, and then degreased by being immersed in an acidic solvent with its one side masked. Thus, the surface of the nickel foil is activated. The nickel foil activated is connected to a power supply for current application. The nickel foil connected to the power supply is immersed in a bismuth plating bath. The bismuth plating bath used is, for example, an organic acid bath containing Bi³⁺ ions and an organic acid. Subsequently, electrical current is applied to the nickel foil under the control of the current density and current application time, so that the unmasked surface of the nickel foil is electroplated with Bi. Following the electroplating, the nickel foil is taken out from the plating bath, and the mask is removed. The nickel foil is then cleaned with pure water and dried. Through these steps, a Bi plating layer is formed on the surface of the nickel foil. The bismuth plating bath used in forming the Bi plating layer is not particularly limited, and can be appropriately selected from known bismuth plating baths capable of depositing a thin film made of a simple substance of Bi. For the bismuth plating bath, the organic acid bath can be an organic sulfonic acid bath, a gluconic acid and ethylenediaminetetraacetic acid (EDTA) bath, or a citric acid and EDTA bath. Furthermore, the bismuth plating bath may be, for example, a sulfuric acid bath. Moreover, an additive may be added to the bismuth plating bath.

Here, Table 1 shows the target thickness of the Bi plating layer produced by Bi electroplating and the thicknesses of the Bi plating layers actually produced.

The samples of the Bi plating layer were produced in the same manner as in Example 1 which will be described later, except that the current application time for the nickel foil serving as the plating substrate was adjusted to target for a plating thickness of 5 µm. The thickness of the obtained Bi plating layer was measured with an X-ray fluorescence spectrometer SEA6000VX manufactured by Seiko Instruments Inc. In the five samples, the Bi layers had respective average thicknesses of 5.7 µm, 5.1 µm, 5.1 µm, 5.7 µm, and 5.8 µm.

**[Table 1]**

| | Target thickness: 5 µm | | | | |
|---|---|---|---|---|---|
| Sample No. | 1 | 2 | 3 | 4 | 5 |
| Plating thickness µm | 5.7 | 5.1 | 5.1 | 5.7 | 5.8 |

Next, the nickel foil and the Bi plating layer formed on the nickel foil are heated. This heat treatment causes solid-phase diffusion of Ni from the nickel foil into the Bi plating layer, so that an active material layer constituted of a BiNi thin film can be produced. Here, a sample obtained by electroplating a nickel foil with Bi is heat-treated, for example, at a temperature of 250°C or higher in a non-oxidizing atmosphere for 30 minutes or longer and shorter than 100 hours, so that solid-phase diffusion of Ni occurs from the nickel foil into the Bi plating layer and thus an active material layer constituted of a BiNi thin film can be produced.

The above samples, each of which had been produced by electroplating the nickel foil with Bi and targeting for a thickness of 5 µm, were each heat-treated at a temperature of 400°C in an argon atmosphere for 60 hours. Thus, an active material layer constituted of a BiNi thin film was produced. Furthermore, the active material layer produced, which was constituted of a BiNi thin film, was also subjected to surface structural analysis by surface X-ray diffractometry.

FIG. 2 is a graph showing an example of the X-ray diffraction pattern of a negative electrode active material layer constituted of a BiNi thin film formed on a nickel foil. The X-ray diffraction pattern was obtained from the surface of the active material layer, that is, the thickness direction of the active material layer 104, by a θ-2θ method using Cu-Kα radiation having wavelengths of 1.5405 Å and 1.5444 Å as X-rays with an X-ray diffractometer (MiniFlex manufactured by Rigaku Corporation). The X-ray diffraction pattern shown in FIG. 2 identified phases of BiNi having a crystal structure of space group C2/m and Ni included in the nickel foil serving as the current collector and in the active material layer.

From the X-ray diffraction pattern of the negative electrode active material layer obtained by surface X-ray diffractometry using Cu-Kα radiation shown in FIG. 2, the intensity ratio I(2)/I(1) of the height intensity I(2) of the maximum peak present in the diffraction angle 2θ range from 41 ° to 43° to the height intensity I(1) of the maximum peak present in the diffraction angle 2θ range from 29° to 31° was calculated. The ratio I(2)/I(1) was 0.28 or less.

From the results of the above X-ray diffraction pattern, it is demonstrated that the negative electrode active material layer 104, which is formed by electroplating the Ni-containing negative electrode current collector 100 with Bi to form a Bi plating layer and then heating the negative electrode current collector 100 together with the Bi plating layer formed on the negative electrode current collector 100, has a surface with a low ratio of the (2,2,3) plane to the (2,2,1) plane of BiNi having a monoclinic crystal structure of space group C2/m. In other words, it is demonstrated that the negative electrode active material layer 104 has a surface with a high orientation of the (2,2,1) plane. This reveals that, by forming a Bi plating layer on a Ni-containing negative electrode current collector and heat-treating the Bi plating layer obtained on the Ni-containing negative electrode current collector, the surface can be oriented to the (2,2,1) plane of BiNi having a monoclinic crystal structure of space group C2/m. The negative electrode including a BiNi thin film having such an orientation as the negative electrode active material layer can achieve further improved cycle characteristics of the battery in addition to an enhanced volumetric energy density.

The constituent elements of the battery 1000 according to the present embodiment will be described in more detail below.

### [Negative electrode]

As described above, the negative electrode 101 includes the negative electrode current collector 100 and the negative electrode active material layer 104. The negative electrode active material layer 104 is configured as described above. Thus, the negative electrode active material layer 104 includes, as the negative electrode active material having properties of occluding and releasing lithium ions, an alloy including Bi and Ni. The negative electrode active material layer 104 includes, as the negative electrode active material, for example, BiNi. The negative electrode active material layer 104 may include BiNi having a crystal structure of space group C2/m.

Bi is a metal element that can be alloyed with lithium. In contrast, Ni cannot be alloyed with lithium. Accordingly, an alloy including Ni has a reduced load on the crystal structure of the negative electrode active material in intercalation and deintercalation of lithium atoms during charge and discharge, presumably suppressing a decrease in the capacity retention rate of the battery. In the case where BiNi serves as the negative electrode active material, Bi occludes lithium and thus forms an alloy with lithium during charge. In other words, during charge of the battery 1000, a lithium-bismuth alloy is generated in the negative electrode active material layer 104. The lithium-bismuth alloy generated includes, for example, at least one selected from the group consisting of LiBi and Li₃Bi. In other words, during charge of the battery 1000, the active material layer 104 includes, for example, at least one selected from the group consisting of LiBi and Li₃Bi. During discharge of the battery 1000, the lithium-bismuth alloy releases lithium and thus returns to BiNi.

During charge and discharge of the battery 1000, BiNi serving as the negative electrode active material undergoes the following reactions, for example. The following reaction examples are those for the case where the lithium-bismuth alloy to be generated during charge is Li₃Bi.
Charge: BiNi+3Li⁺+3e⁻→Li₃Bi+Ni
Discharge: Li₃Bi+Ni→BiNi+3Li⁺+3e⁻

The negative electrode active material layer 104 may include substantially only BiNi as the negative electrode active material. In this case, the battery 1000 can have an enhanced capacity and improved cycle characteristics in addition to an enhanced volumetric energy density. The phrase "the negative electrode active material layer 104 includes substantially only BiNi as the negative electrode active material" means that, for example, the content of the negative electrode active material in the negative electrode active material layer 104 except for BiNi is 1 mass% or less. The negative electrode active material layer 104 may include only BiNi as the negative electrode active material.

The negative electrode active material layer 104 may be free of a solid electrolyte. For example, the negative electrode active material layer 104 may be a layer consisting of BiNi and/or a combination of a lithium-bismuth alloy and nickel that are generated during charge.

The negative electrode active material layer 104 may be disposed in direct contact with the surface of the negative electrode current collector 100.

The negative electrode active material layer 104 may be in the form of a thin film.

The negative electrode active material layer 104 may be a heat-treated plating layer. The negative electrode active material layer 104 may be a heat-treated plating layer provided in direct contact with the surface of the negative electrode current collector 100. In other words, the negative electrode active material layer 104 may be a layer formed as described above by heat-treating a Bi plating layer formed on the Ni-containing negative electrode current collector 100.

In the case where the negative electrode active material layer 104 is a heat-treated plating layer provided in direct contact with the surface of the negative electrode current collector 100, the negative electrode active material layer 104 firmly adheres to the negative electrode current collector 100. It is accordingly possible to further suppress degradation in the current collection characteristics of the negative electrode 101 caused by repeated expansion and contraction of the negative electrode active material layer 104. This further improves the cycle characteristics of the battery 1000. Furthermore, in the case where the negative electrode active material layer 104 is a heat-treated plating layer, it is also possible to achieve a further enhanced capacity owing to Bi, which can be alloyed with lithium, included at a high density in the negative electrode active material layer 104.

The negative electrode active material layer 104 may include a material other than the alloy including Bi and Ni.

The negative electrode active material layer 104 may further include a conductive material.

Examples of the conductive material include a carbon material, a metal, an inorganic compound, and a conductive polymer. Examples of the carbon material include graphite, acetylene black, carbon black, Ketjenblack, a carbon whisker, needle coke, and a carbon fiber. Examples of the graphite include natural graphite and artificial graphite. Examples of the natural graphite include vein graphite and flake graphite. Examples of the metal include copper, nickel, aluminum, silver, and gold. Examples of the inorganic compound include tungsten carbide, titanium carbide, tantalum carbide, molybdenum carbide, titanium boride, and titanium nitride. These materials may be used alone or in mixture.

The negative electrode active material layer 104 may further include a binder.

Examples of the binder include a fluorine-containing resin, a thermoplastic resin, ethylene propylene diene monomer (EPDM) rubber, sulfonated EPDM rubber, and natural butyl rubber (NBR). Examples of the fluorine-containing resin include polytetrafluoroethylene (PTFE), polyvinylidene fluoride (PVdF), and fluororubber. Examples of the thermoplastic resin include polypropylene and polyethylene. These materials may be used alone or in mixture.

The thickness of the negative electrode active material layer 104 is not particularly limited, and may be 1 µm or more and 100 µm or less, for example.

The density of the negative electrode active material layer 104 may be 5.0 g/cm³ or more, and may be 6.0 g/cm³ or more, for example. The density of the negative electrode active material layer 104 may be 11.5 g/cm³ or less, for example. The density of the negative electrode active material layer 104 is measured by the method used in examples which will be described later.

The material for the negative electrode current collector 100 is, for example, a simple substance of metal or an alloy. More specifically, the material for the negative electrode current collector 100 may be a simple substance of metal including, or an alloy including, at least one selected from the group consisting of copper, chromium, nickel, titanium, platinum, gold, aluminum, tungsten, iron, and molybdenum. The material for the negative electrode current collector 100 may be stainless steel.

The negative electrode current collector 100 may include at least one selected from the group consisting of copper (Cu) and nickel (Ni).

The negative electrode current collector 100 may be in the form of a plate or foil. To easily achieve a high conductivity, the negative electrode current collector 100 may be a metal foil, and may be a nickel-containing metal foil. Examples of the nickel-containing metal foil include a nickel foil and a nickel alloy foil. The content of nickel in the nickel-containing metal foil may be 50 mass% or more, and may be 80 mass% or more. In particular, the nickel-containing metal foil may be a nickel foil, which includes substantially only nickel as the metal. The negative electrode current collector 100 may be obtained by forming, on the surface of a metal foil made of a metal other than nickel or of an alloy other than a nickel alloy, a Ni layer such as a Ni plating layer.

The negative electrode current collector 100 may be a multilayer film.

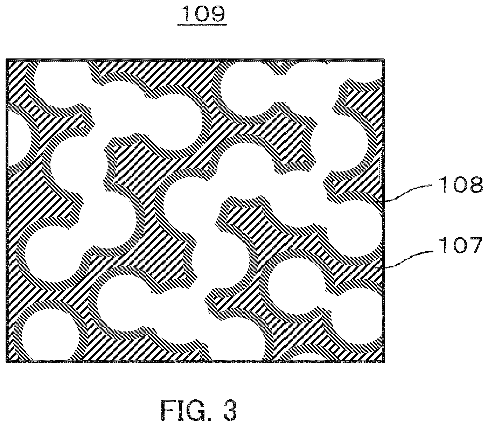

FIG. 3 is a partially enlarged cross-sectional view schematically showing a modification of the negative electrode of the battery according to the embodiment of the present disclosure. The negative electrode of the battery according to the embodiment of the present disclosure may be a negative electrode 109 including a substrate 107 that is a porous body and a negative electrode active material layer 108 positioned on the surface of the substrate 107, as shown in FIG. 3. The negative electrode active material layer 108 includes an alloy including Bi and Ni, like the negative electrode active material layer 104 described above. The negative electrode active material layer 108 includes, as the alloy including Bi and Ni, for example, BiNi. In the negative electrode 109 having such a configuration, the substrate 107 that is a porous body has conductivity, for example. In this case, the substrate 107 can serve as the current collector of the negative electrode 109. The negative electrode 109 may further include a negative electrode current collector (not shown in the figures) constituted of a conductor in the form of, for example, a plate or foil. In this case, for example, the negative electrode current collector in the form of a plate or foil and the substrate 107 serve as the current collector of the negative electrode. The term "porous body" refers to a structure having pores including open holes that are open to the outside. Examples of the porous body as used herein include a mesh and a porous structure. The porous structure is a structure constituted of a porous material having pores of any size. An example of the porous structure is a foam. In addition, the porous structure may be a three-dimensional network structure having intercommunicating pores. The "pore" as used herein encompasses both one that is filled with, for example, an active material layer and one that is not filled with, for example, an active material layer. In other words, one that is filled with, for example, an active material layer is regarded as a "pore" as well.

### [Positive electrode]

The positive electrode 103 includes the positive electrode active material layer 106. The positive electrode active material layer 106 includes a material capable of occluding and releasing metal ions such as lithium ions. The material is, for example, a positive electrode active material.

The positive electrode active material layer 106 includes, as the positive electrode active material, a composite oxide represented by the following composition formula (1).

LiₐNi_{b}Me_{c}O_{2d} (1)

in the composition formula (1),
a satisfies 0.8 ≤ a ≤ 1.2,
b satisfies 0.5 ≤ b ≤ 1.0,
c satisfies 0 ≤ c ≤ 0.6,
d satisfies 0 < d, and
Me is at least one selected from the group consisting of Mn, Co, and Al.

In the composition formula (1), a may satisfy 0.9 ≤ a, and may satisfy 0.95 ≤ a. Furthermore, in the composition formula (1), a may satisfy a ≤ 1.1, and may satisfy a ≤ 1.05. The range for a may be determined by an appropriate combination of the above upper and lower limit values. In the composition formula (1), a may satisfy a = 1.

In the composition formula (1), b may satisfy 0.55 ≤ b, may satisfy 0.56 ≤ b, and may satisfy 0.58 ≤ b. Furthermore, in the composition formula (1), b may satisfy b ≤ 0.95, and may satisfy b ≤ 0.9. The range for b may be determined by an appropriate combination of the above upper and lower limit values. For example, b may satisfy 0.55 ≤ b ≤ 1, may satisfy 0.56 ≤ b ≤ 1, may satisfy 0.58 ≤ b ≤ 1, may satisfy 0.55 ≤ b ≤ 0.95, may satisfy 0.56 ≤ b ≤ 0.95, and may satisfy 0.58 ≤ b ≤ 0.95.

In the composition formula (1), c may satisfy 0.05 ≤ c, and may satisfy 0.1 ≤ c. Furthermore, in the composition formula (1), c may satisfy c ≤ 0.5, may satisfy c ≤ 0.45, and may satisfy c ≤ 0.4. The range for c may be determined by an appropriate combination of the above upper and lower limit values.

In the composition formula (1), d may satisfy 0.8 ≤ d ≤ 1.2. In the composition formula (1), d may satisfy 0.9 ≤ d, and may satisfy 0.95 ≤ d. Furthermore, in the composition formula (1), d may satisfy d ≤ 1.1, and may satisfy d ≤ 1.05. The range for d may be determined by an appropriate combination of the above upper and lower limit values. In the composition formula (1), d may satisfy d = 1.

The positive electrode active material layer 106 may include the composite oxide represented by the composition formula (1) as the main component. Here, the phrase "the positive electrode active material layer 106 include the composite oxide represented by the composition formula (1) as the main component" is defined as meaning that "the content of the composite oxide represented by the composition formula (1) in the positive electrode active material layer 106 is 50 mass% or more". The content of the composite oxide represented by the composition formula (1) in the positive electrode active material layer 106 can be determined by, for example, performing Rietveld analysis on the X-ray diffraction results for the positive electrode active material layer 106 to calculate the ratio between the compounds included therein.

Examples of the material for the positive electrode current collector 105 include a metal material. Examples of the metal material include copper, stainless steel, iron, and aluminum.

The positive electrode active material layer 106 may include a solid electrolyte. The solid electrolyte may be any of the solid electrolytes described as examples of the material for the solid electrolyte layer 102.

The positive electrode active material may have a median diameter of 0.1 µm or more and 100 µm or less. In the case where the positive electrode active material has a median diameter of 0.1 µm or more, the positive electrode active material and the solid electrolyte can form a favorable dispersion state. This enhances the charge and discharge characteristics of the battery. In the case where the positive electrode active material has a median diameter of 100 µm or less, lithium diffuses at an enhanced rate. This enables the battery to operate at a high output.

The positive electrode active material may have a larger median diameter than the solid electrolyte has. In this case, the positive electrode active material and the solid electrolyte can form a favorable dispersion state.

From the viewpoint of the energy density and output of the battery, in the positive electrode active material layer 106, the ratio of the volume of the positive electrode active material to the sum of the volume of the positive electrode active material and the volume of the solid electrolyte may be 0.30 or more and 0.95 or less.

To prevent the solid electrolyte from reacting with the positive electrode active material, a coating layer may be formed on the surface of the positive electrode active material. In this case, an increase in the reaction overvoltage of the battery can be suppressed. Examples of the coating material included in the coating layer include a sulfide solid electrolyte, an oxide solid electrolyte, and a halide solid electrolyte.

The positive electrode 103 may have a thickness of 10 µm or more and 500 µm or less. In the case where the positive electrode 103 has a thickness of 10 µm or more, the battery can achieve a sufficient energy density. In the case where the positive electrode 103 has a thickness of 500 µm or less, the battery can operate at a high output.

The positive electrode 103 may include a conductive material for the purpose of enhancing the electronic conductivity.

The positive electrode 103 may include a binder.

The conductive material and the binder each may be the same material as any of the materials usable as the negative electrode active material layer 104.

The positive electrode 103 may include a nonaqueous electrolyte solution, a gel electrolyte, or an ionic liquid for the purpose of facilitating the transfer of lithium ions and enhancing the output characteristics of the battery.

The nonaqueous electrolyte solution includes a nonaqueous solvent and a lithium salt dissolved in the nonaqueous solvent. Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used. The lithium salt has a concentration of, for example, 0.5 mol/L or more and 2 mol/L or less.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may include a lithium salt.

### [Electrolyte layer]

The electrolyte layer 102 includes an electrolyte material. The electrolyte layer 102 is constituted of, for example, a nonaqueous electrolyte. The electrolyte material included in the electrolyte layer 102 may be a solid electrolyte, or may be an electrolyte solution. In the configuration example in FIG. 1, the electrolyte material included in the electrolyte layer 102 is a solid electrolyte.

In the case where the electrolyte material is a solid electrolyte, the solid electrolyte may be a halide solid electrolyte, a sulfide solid electrolyte, an oxide solid electrolyte, a polymer solid electrolyte, or a complex hydride solid electrolyte.

The halide solid electrolyte refers to a solid electrolyte including a halogen element. The halide solid electrolyte, which includes the halogen element, may further include oxygen. The halide solid electrolyte is free of sulfur (S).

The halide solid electrolyte may be, for example, a material represented by the following composition formula (2):

Li_{α}M_{β}X_{γ} Formula (2)

in the composition formula (2), α, β, and γ are each a value greater than 0, M is at least one selected from the group consisting of metalloid elements and metal elements other than Li, and X is at least one selected from the group consisting of F, C!, Br, and I.

The "metalloid elements" refer to B, Si, Ge, As, Sb, and Te.

The "metal elements" refer to all the elements included in Groups 1 to 12 of the periodic table except hydrogen and all the elements included in Groups 13 to 16 of the periodic table except B, Si, Ge, As, Sb, Te, C, N, P, O, S, and Se. In other words, the "metalloid elements" and the "metal elements" are each a group of elements that can become a cation when forming an inorganic compound with a halogen compound.

In the composition formula (2), M may include Y, and X may include Cl and Br.

The halide solid electrolyte may be, for example, Li₃(Ca,Y,Gd)X₆, Li₂MgX₄, Li₂FeX₄, Li(Al,Ga,In)X₄, Li₃(Al,Ga,In)X₆, or Lil. Here, the element X in the above solid electrolytes is at least one selected from the group consisting of F, C!, Br, and I. In the present disclosure, when an element in a formula is expressed as, for example, "(AI,Ga,ln)", this expression indicates at least one element selected from the group of elements in parentheses. In other words, "(Al,Ga,In)" is synonymous with "at least one selected from the group consisting of Al, Ga, and In". The same applies to other elements.

Another example of the halide solid electrolyte is a compound represented by LiₐMe_{b}Y_{c}X₆, where a + mb + 3c = 6 and c > 0 are satisfied, Me is at least one selected from the group consisting of metalloid elements and metal elements other than Li or Y, and m is the valence of Me. The "metalloid elements" refer to B, Si, Ge, As, Sb, and Te. The "metal elements" refer to all the elements included in Groups 1 to 12 of the periodic table (except hydrogen) and all the elements included in Groups 13 to 16 of the periodic table (except B, Si, Ge, As, Sb, Te, C, N, P, O, S, and Se).

To enhance the ionic conductivity of the halide solid electrolyte material, Me may be at least one selected from the group consisting of Mg, Ca, Sr, Ba, Zn, Sc, Al, Ga, Bi, Zr, Hf, Ti, Sn, Ta, and Nb. The halide solid electrolyte may be Li₃YCl₆, Li₃YBr₆, or Li₃YBrₚCl₆₋ₚ, where p satisfies 0 < p < 6.

The sulfide solid electrolyte refers to a solid electrolyte including sulfur (S). The sulfide solid electrolyte, which includes sulfur, may further include a halogen element.

The sulfide solid electrolyte can be, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂.

The oxide solid electrolyte can be, for example: a NASICON solid electrolyte typified by LiTi₂(PO₄)₃ and element-substituted substances thereof; a (LaLi)TiO₃-based perovskite solid electrolyte; a LISICON solid electrolyte typified by Li₁₄ZnGe₄O₁₆, Li₄SiO₄, and LiGeO₄ and element-substituted substances thereof; a garnet solid electrolyte typified by Li₇La₃Zr₂O₁₂ and element-substituted substances thereof; Li₃PO₄ and N-substituted substances thereof; or glass or glass ceramics based on a Li-B-O compound, such as LiBO₂ or Li₃BO₃, to which Li₂SO₄, Li₂CO₃, or the like is added.

The polymer solid electrolyte can be, for example, a compound of a polymer compound and a lithium salt. The polymer compound may have an ethylene oxide structure. The polymer compound having an ethylene oxide structure can include a lithium salt in a large amount. Accordingly, the ionic conductivity can be further enhanced. The lithium salt can be LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), LiC(SO₂CF₃)₃, or the like. One lithium salt selected from the lithium salts described as examples can be used alone. Alternatively, a mixture of two or more lithium salts selected from the lithium salts described as examples can be used.

The complex hydride solid electrolyte can be, for example, LiBH₄-LiI or LiBH₄-P2S5.

The electrolyte layer 102 may include a halide solid electrolyte. The halide solid electrolyte is free of sulfur.

The electrolyte layer 102 may consist substantially of the halide solid electrolyte. The phrase "consist substantially of" as used herein is intended to allow for impurities contained in a content of less than 0.1%. The electrolyte layer 102 may consist of the halide solid electrolyte.

With the above configuration, it is possible to enhance the ionic conductivity of the electrolyte layer 102, thereby reducing a decrease in the energy density of the battery.

The electrolyte layer 102 may further include a binder. The binder may be the same material as any of the materials usable as the negative electrode active material layer 104.

The electrolyte layer 102 may have a thickness of 1 µm or more and 500 µm or less. In the case where the solid electrolyte layer 102 has a thickness of 1 µm or more, the negative electrode 101 and the positive electrode 103 are less prone to be shortcircuited. In the case where the solid electrolyte layer 102 has a thickness of 500 µm or less, the battery can operate at a high output.

The solid electrolyte may have any shape. In the case where the solid electrolyte is a powdery material, its shape may be, for example, an acicular, spherical, or ellipsoidal shape. The solid electrolyte may be, for example, particulate.

For example, in the case where the solid electrolyte is particulate (e.g., spherical), the solid electrolyte may have a median diameter of 100 µm or less, and may have a median diameter of 10 µm or less.

In the present disclosure, the "median diameter" means the particle diameter at a cumulative volume equal to 50% in the volumetric particle size distribution. The volumetric particle size distribution is measured with, for example, a laser diffractometer or an image analyzer.

In the case where the electrolyte layer 102 includes a solid electrolyte, the solid electrolyte can be manufactured by, for example, the following method.

Raw material powders are prepared so as to obtain a target composition. Examples of the raw material powders include an oxide, a hydroxide, a halide, and an acid halide.

In an example where the target composition is Li₃YBr₄Cl₂, LiBr, YCl, and YBr are mixed in an approximate molar ratio of 3:0.66:0.33. The raw material powders may be mixed in a molar ratio that has been adjusted in advance so as to cancel out a composition change that can occur in the synthesis process.

The raw material powders are reacted with each other mechanochemically (i.e., by mechanochemical milling) in a mixer such as a planetary ball mill to obtain a reactant. The reactant may be fired in a vacuum or in an inert atmosphere. Alternatively, the mixture of the raw material powders may be fired in a vacuum or in an inert atmosphere to obtain a reactant. The firing is performed, for example, desirably at 100°C or higher and 300°C or lower for 1 hour or longer. To suppress a composition change during the firing, the raw material powders are fired desirably in a hermetically sealed container such as a quartz tube.

Through these steps, the solid electrolyte is obtained.

The battery 1000, which includes the negative electrode 101, the electrolyte layer 102, and the positive electrode 103 as the basic constituent elements, is enclosed in a hermetically sealed container so as to prevent incorporation of the air and moisture. Examples of the shape of the battery 1000 include a coin type, a cylindrical type, a prismatic type, a sheet type, a button type, a flat type, and a stacked type.

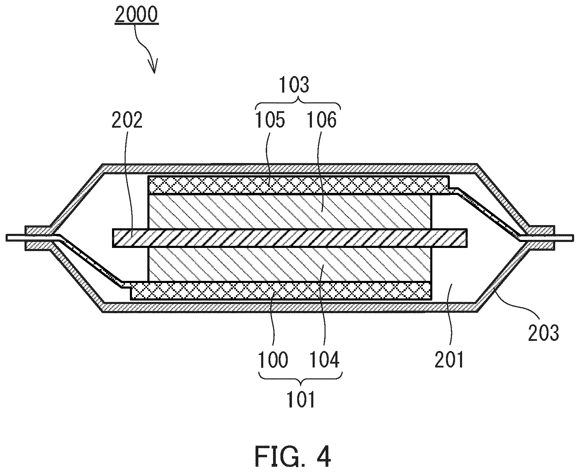

FIG. 4 is a cross-sectional view schematically showing a modification of the battery according to the embodiment of the present disclosure. In the case where the electrolyte material for the electrolyte layer 102 is an electrolyte solution, the battery according to the embodiment of the present disclosure may be, for example, a battery 2000 configured as shown in FIG. 4. In FIG. 4, the members having the same functions as those of the members shown in FIG. 1 are denoted by the same reference numerals. The battery 2000 includes the negative electrode 101, the positive electrode 103, an electrolyte solution 201, a separator 202, and an exterior 203. The separator 202 is disposed between the negative electrode 101 and the positive electrode 103. The negative electrode 101 and the positive electrode 103 face each other with the separator 202 interposed therebetween. The negative electrode 101, the positive electrode 103, the separator 202, and the electrolyte solution 201 are housed in the exterior 203. The electrolyte solution 201 is, for example, an electrolyte solution with which the negative electrode 101, the positive electrode 103, and the separator 202 are impregnated. Thus, in the battery 2000 having a configuration in which an electrolyte solution is used as the electrolyte, the electrolyte solution 201 with which the separator 202 is impregnated is positioned between the negative electrode 101 and the positive electrode 103. In other words, the electrolyte solution 201 with which the separator 202 is impregnated as described above serves as the electrolyte layer. The electrolyte solution 201 may fill the inner space of the exterior 203.

The electrolyte solution 201 includes, for example, a nonaqueous solvent and a lithium salt dissolved in the nonaqueous solvent.

Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, butylene carbonate, and vinylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1 ,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used. The lithium salt has a concentration of, for example, 0.5 mol/L or more and 2 mol/L or less.

The separator 202 has lithium-ion conductivity. The material for the separator 202 may be any material through which lithium ions are allowed to pass. The material for the separator 202 can be at least one selected from the group consisting of a solid electrolyte, a gel electrolyte, an ion exchange resin membrane such as a lithium cation exchange resin membrane, a semipermeable membrane, and a porous membrane. In the case where the separator 202 is formed of the above materials, the safety of the battery 2000 can be sufficiently achieved. Examples of the solid electrolyte include a sulfide solid electrolyte, such as Li₂S-P₂S₅ and an oxide solid electrolyte, such as Li₇La₃Zr₂O₁₂(LLZ). Examples of the gel electrolyte include a gel electrolyte including a fluororesin, such as PVdF. Examples of the ion exchange resin membrane include a cation exchange membrane and an anion exchange membrane. Examples of the porous membrane include a porous membrane made of a polyolefin resin and a porous membrane made of glass paper obtained by weaving glass fibers into a nonwoven fabric.

The exterior 203 is made of a material obtained by, for example, laminating a metal foil, such as an aluminum foil, with a resin film, such as a polyethylene terephthalate (PET) film. The exterior 203 may be a container made of resin or metal.

The electrolyte material for use as the electrolyte layer is not limited to the above solid electrolyte or electrolyte solution, and may be a gel electrolyte or an ionic liquid.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may include a lithium salt.

### Examples

The present disclosure will be described in detail below with reference to examples and reference examples. The following examples are illustrative only, and the present disclosure is not limited to the following examples.

### (Example 1)

### <Production of positive electrode>

The positive electrode active material was produced by coprecipitation. A hydroxide obtained by coprecipitation, represented by [Ni_{0.60}Co_{0.20}Mn_{0.20}](OH)₂, was fired at 500°C to obtain a nickel-cobalt-manganese composite oxide. The composite oxide obtained and lithium hydroxide LiOH were dry-mixed in a molar ratio Li/(Ni + Me) = 1.1, and raised in temperature to 1000°C in an oxygen atmosphere, and the resulting mixture was fired for 10 hours. The mixture fired was analyzed with an inductively coupled plasma emission spectrometer CIROS-120 (manufactured by SPECTRO Analytical Instruments GmbH) to derive the element ratio of the composition. The derived element ratio was Li:Ni:Co:Mn = 1.04:0.59:0.20:0.19 on a molar ratio basis.

The positive electrode active material thus produced, acetylene black (AB) manufactured by Denka Company Limited, an N-methyl-2-pyrrolidone (NMP) solution including KF polymer (polyvinylidene fluoride (PVDF) manufactured by KUREHA CORPORATION, and an NMP solution were mixed to obtain a positive electrode mixture slurry. The positive electrode mixture slurry was produced in a mass ratio of the positive electrode active material:AB:PVDF = 90:7:3.

The positive electrode mixture slurry was applied to one side of a 10-µm thick aluminum foil serving as the positive electrode current collector. The positive electrode sheet, which was composed of the positive electrode current collector and the positive electrode mixture slurry applied thereto, was dried and then pressed. Subsequently, the positive electrode sheet pressed was punched out into a 2 cm × 2 cm piece to produce a positive electrode.

The positive electrode mixture layer had a density of 2.4 g/cm³. The density was calculated from the thickness and mass of the positive electrode mixture pressed.

### <Production of negative electrode>

A pretreatment was performed in which a nickel foil (10 cm × 10 cm, thickness: 10 µm) was preliminarily degreased with an organic solvent, and then degreased by being immersed in an acidic solvent with its one side masked. Thus, the surface of the nickel foil was activated. To 1.0 mol/L of methanesulfonic acid, methanesulfonic acid bismuth serving as the soluble bismuth salt was added so that Bi³⁺ ions would reach 0.18 mol/L. Thus, a plating bath was produced. The nickel foil activated was connected to a power supply for current application, and then immersed in the plating bath. Subsequently, the unmasked surface of the nickel foil was electroplated with Bi under the control of the current density to 2 A/dm² so that the thickness would reach about 5 µm. Following the electroplating, the nickel foil was taken out from the acidic bath, and the mask was removed. The nickel foil was then cleaned with pure water and dried. Subsequently, in an electric furnace set to an argon atmosphere, the Bi-electroplated nickel foil was heat-treated at 400C° for 60 hours. Following the heat treatment, the Bi plating layer formed on the nickel foil was subjected to surface X-ray diffractometry. The X-ray diffraction pattern obtained by the diffractometry is as shown in FIG. 2. The X-ray diffraction pattern demonstrates that BiNi having a monoclinic crystal structure of C2/m space group was generated. In other words, a stack was obtained that was composed of: the current collector, which was constituted of a nickel foil; and the active material layer, which was made of BiNi having a crystal structure of space group C2/m and disposed in direct contact with the surface of the current collector. Subsequently, the stack obtained was punched out into a 2 cm × 2 cm piece to produce a negative electrode. In the active material layer of the negative electrode of Example 1, the peak intensity ratio I(2)/I(1) in the X-ray diffraction pattern was 0.28 or less.

The negative electrode active material layer had a density of 10.7 g/cm³. The density of the negative electrode active material layer was calculated as follows. The layer was analyzed with a scanning electron microscope SU-70 (manufactured by Hitachi High-Tech Corporation) to determine the filling rate, and then analyzed with an energy dispersive X-ray spectrometer EDAX Genesis (manufactured by AMETEK Inc.) to calculate the element ratio between Bi and Ni. The layer was analyzed for the X-ray diffraction pattern with an X-ray diffractometer (MiniFlex manufactured by Rigaku Corporation) to determine the densities of BiNi and Ni. From the calculated element ratio and the determined densities of BiNi and Ni, the density of the negative electrode active material layer was calculated. BiNi used had a density of 11.5 g/cm³, and Ni used had a density of 8.9 g/cm³.

### <Production of test cell>

The positive electrode and the negative electrode were disposed so that the respective active material sides would face each other. The positive electrode was double-coated with a microporous separator (Celgard 3401 manufactured by Asahi Kasei Corporation). The electrolyte solution prepared was a solution obtained by dissolving LiPF₆ in vinylene carbonate (VC) at a concentration of 1.0 mol/L. The positive electrode, the negative electrode, and the electrolyte solution as prepared above were used to assemble a battery serving as the test cell of Example 1.

### <Charge and discharge test>

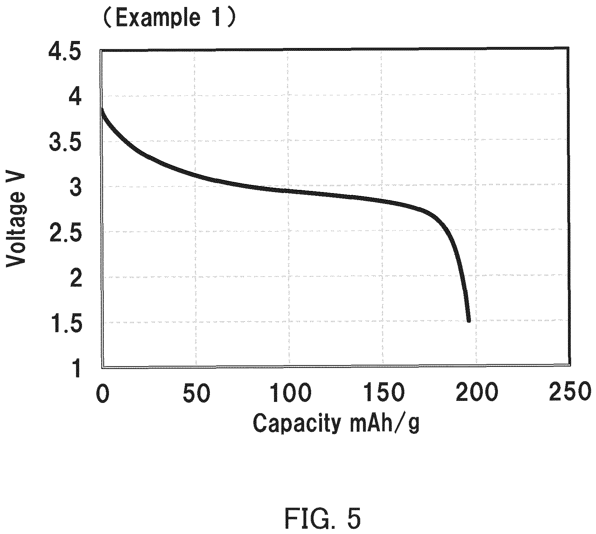

In a thermostatic chamber set to 25°C, at a current value of IT = 0.05 calculated from the capacity of the positive electrode, the test cell of Example 1 was charged to 3.9 V (vs. Li⁺/Li) and then discharged to 1.5 V (vs. Li⁺/Li). FIG. 5 is a graph of the results of the charge and discharge test on the test cell according to Example 1, showing the voltage during discharge and the discharge capacity per unit mass of the positive electrode active material. As shown in FIG. 5, the results of the charge test indicate that the test cell of Example 1 had a discharge capacity of 196.1 mAh/g per unit mass of the positive electrode active material. Moreover, the volumetric energy density, calculated by dividing the discharge capacity by the volume of the positive electrode, was 470.64 mAh/cm³.

### (Example 2)

### <Production of positive electrode>

The positive electrode was produced in the same manner as in Example 1, except that a different positive electrode active material was prepared.

The positive electrode active material was produced by coprecipitation. A hydroxide obtained by coprecipitation, represented by [Ni_{0.80}Co_{0.15}Mn_{0.05}](OH)₂, was fired at 500°C to obtain a nickel-cobalt-manganese composite oxide. The composite oxide obtained and lithium hydroxide LiOH were dry-mixed in a molar ratio Li/(Ni + Me) = 1.1, and raised in temperature to 1000°C in an oxygen atmosphere, and the resulting mixture was fired for 10 hours. The mixture fired was analyzed with an inductively coupled plasma emission spectrometer CIROS-120 (manufactured by SPECTRO Analytical Instruments GmbH) to derive the element ratio of the composition. The derived element ratio was Li:Ni:Co:Mn = 1.04:0.81:0.15:0.04 on a molar ratio basis.

The positive electrode active material prepared as described above was used to produce a positive electrode of Example 2 in the same manner as in Example 1. In the positive electrode of Example 2, the positive electrode mixture layer pressed had a density of 2.5 g/cm³. The density was calculated in the same manner as in Example 1.

### <Production of negative electrode>

The negative electrode of Example 2 was produced in the same manner as in Example 1.

### <Production of test cell>

The positive electrode and the negative electrode of Example 2 were used to assemble a battery serving as the test cell of Example 2 in the same manner as in Example 1.

### <Charge and discharge test>

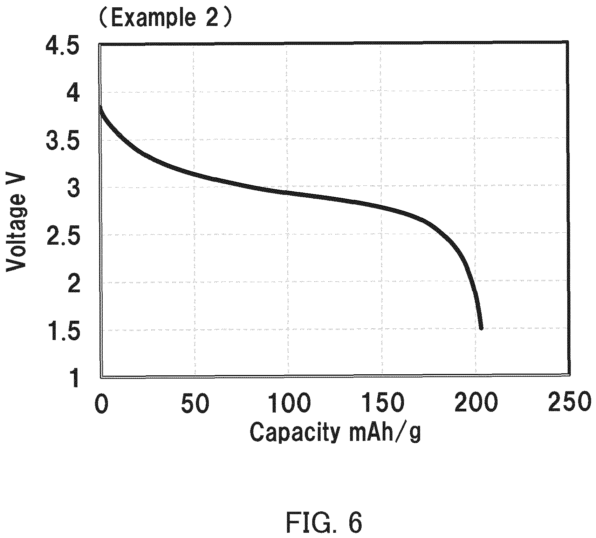

A charge and discharge test was performed on the test cell of Example 2 in the same manner as in Example 1. FIG. 6 is a graph of the results of the charge and discharge test on the test cell according to Example 2, showing the voltage during discharge and the discharge capacity per unit mass of the positive electrode active material. As shown in FIG. 6, the results of the charge test indicate that the test cell of Example 2 had a discharge capacity of 203.2 mAh/g per unit mass of the positive electrode active material. Moreover, the volumetric energy density, calculated by dividing the discharge capacity by the volume of the positive electrode, was 508 mAh/cm³.

### (Example 3)

### <Production of positive electrode>

The positive electrode was produced in the same manner as in Example 1, except that a different positive electrode active material was prepared.

The positive electrode active material was produced by coprecipitation. A hydroxide obtained by coprecipitation, represented by [Ni_{0.90}Co_{0.07}Al_{0.03}](OH)₂, was fired at 500°C to obtain a nickel-cobalt-aluminum composite oxide. The composite oxide obtained and lithium hydroxide LiOH were dry-mixed in a molar ratio Li/(Ni + Me) = 1.05, and raised in temperature to 760°C in an oxygen atmosphere, and the resulting mixture was fired for 20 hours. The mixture fired was analyzed with an inductively coupled plasma emission spectrometer CIROS-120 (manufactured by SPECTRO Analytical Instruments GmbH) to derive the element ratio of the composition. The derived element ratio was Li:Ni:Co:Al = 1.04:0.90:0.07:0.03 on a molar ratio basis.

The positive electrode active material prepared as described above was used to produce a positive electrode of Example 3 in the same manner as in Example 1. In the positive electrode of Example 3, the positive electrode mixture layer pressed had a density of 2.5 g/cm³. The density was calculated in the same manner as in Example 1.

### <Production of negative electrode>

The negative electrode of Example 3 was produced in the same manner as in Example 1.

### <Production of test cell>

The positive electrode and the negative electrode were disposed so that the respective active material sides would face each other. The positive electrode was double-coated with a microporous separator (Celgard 3401 manufactured by Asahi Kasei Corporation). The electrolyte solution prepared was a solution obtained by dissolving LiPF₆ at a concentration of 1.0 mol/L in a solvent mixture of ethylene carbonate (EC) and methyl ethyl carbonate (MEC) mixed in a volume ratio of 1:1. The positive electrode, the negative electrode, and the electrolyte solution as prepared above were used to assemble a battery serving as the test cell of Example 3.

### <Charge and discharge test>

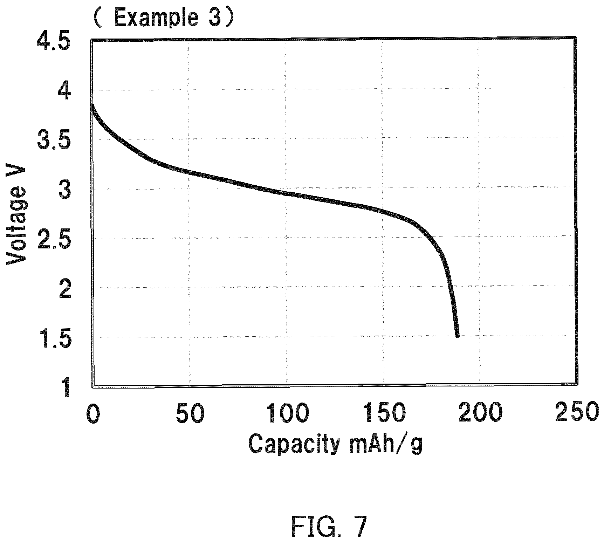

A charge and discharge test was performed on the test cell of Example 3 in the same manner as in Example 1. FIG. 7 is a graph of the results of the charge and discharge test on the test cell according to Example 3, showing the voltage during discharge and the discharge capacity per unit mass of the positive electrode active material. As shown in FIG. 7, the results of the charge test indicate that the test cell of Example 2 had a discharge capacity of 188.5 mAh/g per unit mass of the positive electrode active material. Moreover, the volumetric energy density, calculated by dividing the discharge capacity by the volume of the positive electrode, was 471.25 mAh/cm³.

### (Reference Example 1)

### <Production of positive electrode>

The positive electrode was produced in the same manner as in Example 1, except that a different positive electrode active material was prepared.

The positive electrode active material was produced by coprecipitation. A hydroxide obtained by coprecipitation, represented by [Ni_{0.34}Co_{0.33}Mn_{0.33}](OH)₂, was fired at 500°C to obtain a nickel-cobalt-manganese composite oxide. The composite oxide obtained and lithium hydroxide LiOH were dry-mixed in a molar ratio Li/(Ni + Me) = 1.05, and raised in temperature to 1000°C in an oxygen atmosphere, and the resulting mixture was fired for 10 hours. The mixture fired was analyzed with an inductively coupled plasma emission spectrometer CIROS-120 (manufactured by SPECTRO Analytical Instruments GmbH) to derive the element ratio of the composition. The derived element ratio was Li:Ni:Co:Mn = 1.03:0.35:0.32:0.33 on a molar ratio basis.

The positive electrode active material prepared as described above was used to produce a positive electrode of Reference Example 1 in the same manner as in Example 1. In the positive electrode of Reference Example 1, the positive electrode mixture layer pressed had a density of 2.6 g/cm³. The density was calculated in the same manner as in Example 1.

### <Production of negative electrode>

The negative electrode of Reference Example 1 was produced in the same manner as in Example 1.

### <Production of test cell>

The positive electrode and the negative electrode of Reference Example 1 were used to assemble a battery serving as the test cell of Reference Example 1 in the same manner as in Example 1.

### <Charge and discharge test>

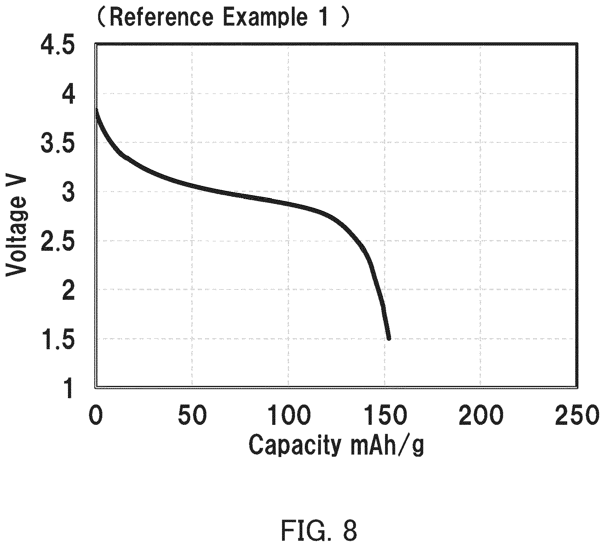

A charge and discharge test was performed on the test cell of Reference Example 1 in the same manner as in Example 1. FIG. 8 is a graph of the results of the charge and discharge test on the test cell according to Reference Example 1, showing the voltage during discharge and the discharge capacity per unit mass of the positive electrode active material. As shown in FIG. 8, the results of the charge test indicate that the test cell of Reference Example 1 had a discharge capacity of 152.2 mAh/g per unit mass of the positive electrode active material. Moreover, the volumetric energy density, calculated by dividing the discharge capacity by the volume of the positive electrode, was 365.28 mAh/cm³.

### (Example 4)

### <Production of solid electrolyte>

In an argon atmosphere with a dew point of -60°C or lower (hereinafter referred to as a "dry argon atmosphere"), raw material powders LiBr, YCl₃, and YBr₃ were prepared in a molar ratio of LiBr:YCl₃:YBr₃ = 3:2/3:1/3. These raw material powders were pulverized and mixed in a mortar to obtain a mixture of the raw material powders. Subsequently, in a dry argon atmosphere, the mixture of the raw material powders obtained was fired in an electric furnace at 500°C for 3 hours to obtain a fired product. The fired product obtained was pulverized in a mortar with a pestle. Thus, a solid electrolyte having composition represented by Li₃YBr₄Cl₂ was obtained. "Li₃YBr₄Cl₂" is hereinafter also referred to as "LYBC".

### <Production of positive electrode>

The positive electrode active material was produced in the same manner as in Example 1.

The positive electrode was produced by applying a positive electrode mixture slurry including the positive electrode active material to an aluminum foil in an argon atmosphere. The slurry including the positive electrode active material was produced as follows. First, in an argon atmosphere, the solid electrolyte LYBC, carbon nanofiber VGCF (registered trademark) manufactured by SHOWA DENKO K.K. serving as the conductive additive, and a hydrogenated styrenic thermoplastic elastomer (SEBS), Tuftec (registered trademark) N504 manufactured by Asahi Kasei Corporation serving as the binder were added to the positive electrode active material. These components were mixed in a mass ratio of the positive electrode active material:the solid electrolyte:the conductive additive:the binder = 75.8:21.4:0.8:2.0. The resulting mixture was dissolved in a tetralin solvent to produce a positive electrode mixture slurry.

The positive electrode mixture slurry was applied to one side of a 10-µm thick aluminum foil serving as the positive electrode current collector. The positive electrode sheet, which was composed of the positive electrode current collector and the positive electrode mixture slurry applied thereto, was dried and then pressed. Subsequently, the positive electrode sheet pressed was punched out into a ϕ0.92-cm piece to produce a positive electrode.

The positive electrode mixture layer had a density of 2.6 g/cm³. The density was calculated from the mass of the positive electrode mixture layer after drying, the area of the electrode, and the thickness of the mixture layer. The thickness of the mixture layer was determined from a cross-sectional secondary electron image of the pellet disassembled before charge and discharge of a separately produced test cell, which will be described later. To conduct the density calculation under the same conditions as those for Examples 1 to 3 and Reference Example 1, the solid electrolyte was assumed to have a volume as voids. The calculation was performed on the assumption that the solid electrolyte had a density of 2.8 g/cm³. The secondary electron image was captured with a scanning electron microscope SU-70 (manufactured by Hitachi High-Tech Corporation).

### <Production of negative electrode>

The negative electrode of Example 4 was produced in the same manner as in Example 1, except that the stack composed of the current collector and the active material layer was punched out into a ϕ0.92-cm piece as the negative electrode. Thus, the negative electrode having ϕ0.92 cm was produced.

### <Production of test cell>

In an insulating outer cylinder having an inner diameter of 9.4 mm, the positive electrode and the negative electrode obtained each having ϕ0.92 cm were disposed so that the respective active material-containing layer sides would face each other. The positive electrode, a layer formed of a solid electrolyte Li₃YBr₄Cl₂ (80 mg), and the negative electrode were stacked so that the solid electrolyte would be disposed between the positive electrode active material-containing layer and the negative electrode active material-containing layer. To the stack thus obtained, a pressure of 360 MPa was applied in the stacking direction. Thus, a battery serving as the test cell including a positive electrode, a solid electrolyte layer, and a negative electrode was formed. In the test cell, the positive electrode had a thickness of 22 µm, the solid electrolyte layer had a thickness of 400 µm, and the negative electrode had a thickness of 16.5 µm.

Subsequently, current collectors made of stainless steel were attached to the positive electrode and the negative electrode, and current collector leads were attached to the current collectors.

Lastly, an insulating ferrule was used to block the inside of the insulating outer cylinder from the outside air atmosphere to hermetically seal the cylinder.

### <Charge and discharge test>

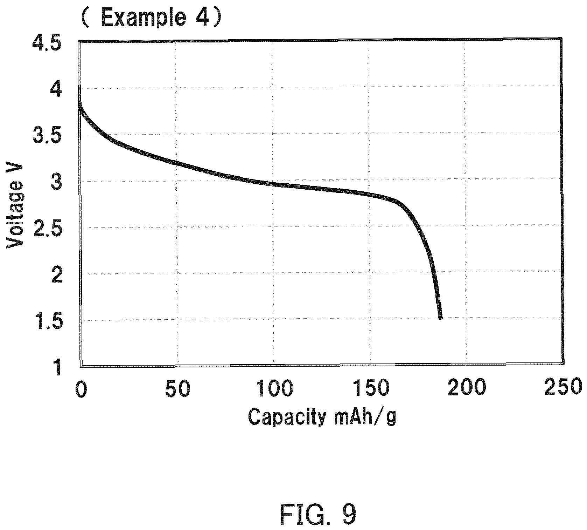

A charge and discharge test was performed on the produced test cell under the following conditions. In a thermostatic chamber set to 25°C, at a current value of IT = 0.05 calculated from the capacity of the positive electrode, the test cell was charged to 3.9 V (vs. Li⁺/Li) and then discharged to 1.5 V (vs. Li⁺/Li). FIG. 9 is a graph of the results of the charge and discharge test on the test cell according to Example 4, showing the voltage during discharge and the discharge capacity per unit mass of the positive electrode active material. As shown in FIG. 9, the results of the charge test indicate that the test cell of Example 4 had a discharge capacity of 186.5 mAh/g per unit mass of the positive electrode active material. Moreover, the volumetric energy density, calculated by dividing the discharge capacity by the volume of the positive electrode, was 484.9 mAh/cm³.

### (Example 5)

### <Production of solid electrolyte>

The solid electrolyte LYBC was produced in the same manner as in Example 4.

### <Production of positive electrode>

The positive electrode of Example 5 was produced in the same manner as in Example 4.

### <Production of negative electrode>

The negative electrode of Example 5 was produced in the same manner as in

### Example 4.

### <Production of test cell>

In an insulating outer cylinder having an inner diameter of 9.4 mm, the positive electrode and the negative electrode obtained each having ϕ0.92 cm were disposed so that the respective active material-containing layer sides would face each other. The positive electrode, a sulfide solid electrolyte Li₆PS₅Cl (manufactured by Ampcera Inc., 80 mg), and the negative electrode were stacked so that the sulfide solid electrolyte would be disposed between the positive electrode active material-containing layer and the negative electrode active material-containing layer. To the stack thus obtained, a pressure of 360 MPa was applied in the stacking direction. Thus, a battery serving as the test cell including a positive electrode, a solid electrolyte layer, and a negative electrode was formed. In the test cell, the positive electrode had a thickness of 22 µm, the solid electrolyte layer had a thickness of 400 µm, and the negative electrode had a thickness of 16.5 µm.

Subsequently, current collectors made of stainless steel were attached to the positive electrode and the negative electrode, and current collector leads were attached to the current collectors.

Lastly, an insulating ferrule was used to block the inside of the insulating outer cylinder from the outside air atmosphere to hermetically seal the cylinder.

### <Charge and discharge test>

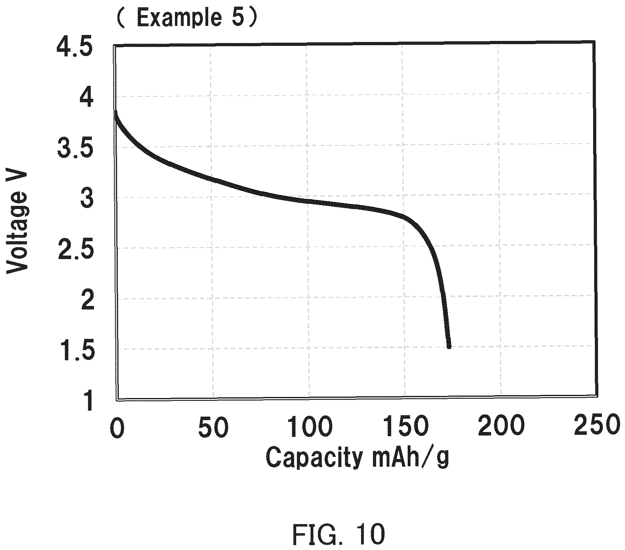

A charge and discharge test was performed on the test cell of Example 5 in the same manner as in Example 4. FIG. 10 is a graph of the results of the charge and discharge test on the test cell according to Example 5, showing the voltage during discharge and the discharge capacity per unit mass of the positive electrode active material. As shown in FIG. 10, the results of the charge test indicate that the test cell of Reference Example 1 had a discharge capacity of 173.2 mAh/g per unit mass of the positive electrode active material. Moreover, the volumetric energy density, calculated by dividing the discharge capacity by the volume of the positive electrode, was 450.32 mAh/cm³.

### (Example 6)

### <Production of solid electrolyte>

The solid electrolyte LYBC was produced in the same manner as in Example 4.

### <Production of positive electrode>

A lithium-nickel-cobalt-manganese composite oxide was produced in the same manner as in Example 2.

In an argon glove box, niobium ethoxide (manufactured by Sigma-Aldrich Co., LLC.) and lithium ethoxide (manufactured by Sigma-Aldrich Co., LLC.) were mixed in a mass ratio of niobium ethoxide:lithium ethoxide = 6.1:1. The resulting mixture was dissolved in super-dehydrated ethanol (manufactured by FUJIFILM Wako Pure Chemical Corporation) to prepare a coating solution.

The lithium-nickel-cobalt-manganese composite oxide was placed in a mortar, the coating solution was added thereto for mixing, and then ethanol was evaporated to obtain a powder. The powder obtained was fired at 350°C for 3 hours to obtain a lithium-nickel-cobalt-manganese composite oxide coated with lithium niobate as the positive electrode active material of Example 6.

The positive electrode of Example 6 was produced in the same manner as in Example 4, except that the above positive electrode active material was used. The positive electrode mixture layer had a density of 2.7 g/cm³. The density was calculated in the same manner as in Example 4.

### <Production of negative electrode>

The negative electrode of Example 6 was produced in the same manner as in Example 4.

### <Production of test cell>

The positive electrode and the negative electrode of Example 6 were used to assemble a battery serving as the test cell of Example 6 in the same manner as in Example 4. In the test cell, the positive electrode had a thickness of 22 µm, the solid electrolyte layer had a thickness of 400 µm, and the negative electrode had a thickness of 16.5 µm.

### <Charge and discharge test>

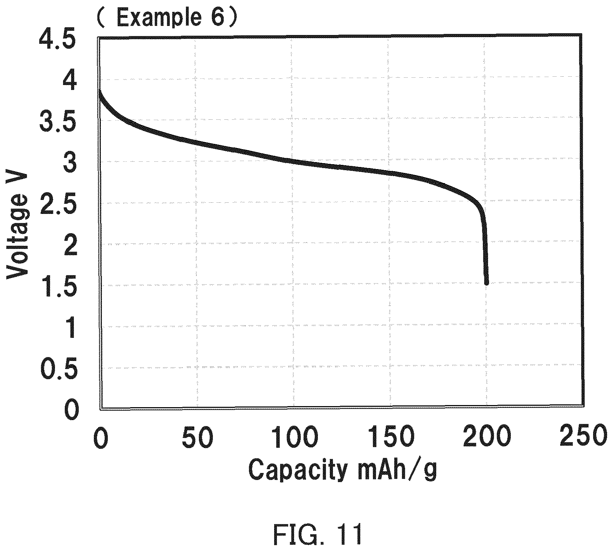

A charge and discharge test was performed on the test cell of Example 6 in the same manner as in Example 4. FIG. 11 is a graph of the results of the charge and discharge test on the test cell according to Example 6, showing the voltage during discharge and the discharge capacity per unit mass of the positive electrode active material. As shown in FIG. 11, the results of the charge test indicate that the test cell of Reference Example 1 had a discharge capacity of 200.4 mAh/g per unit mass of the positive electrode active material. Moreover, the volumetric energy density, calculated by dividing the discharge capacity by the volume of the positive electrode, was 541.08 mAh/cm³.

### (Example 7)

### <Production of solid electrolyte>

The solid electrolyte LYBC was produced in the same manner as in Example 4.

### <Production of positive electrode>

The positive electrode active material was produced in the same manner as in Example 3.

The positive electrode was produced by using the above positive electrode active material. In an argon glove box, the positive electrode active material, the solid electrolyte LYBC, and carbon nanofiber VGCF (registered trademark) manufactured by SHOWA DENKO K.K. serving as the conductive additive were mixed to obtain a positive electrode mixture powder. The positive electrode active material, the solid electrolyte, and the conductive additive were mixed in a mass ratio of the positive electrode active material:the solid electrolyte:the conductive additive = 60:30:10.

The positive electrode mixture layer had a density of 2.4 g/cm³. The density was calculated in the same manner as in Example 4. In other words, for the layer formed of the positive electrode mixture powder, which will be described later in <Production of test cell> section, the density of the positive electrode mixture layer was calculated from the mass of the positive electrode mixture layer, the "mixture layer thickness" determined with an SEM, and the 9.4-mm inner diameter of the test cell. To conduct the density calculation under the same conditions as those for Examples 1 to 3 and Reference Example 1, the solid electrolyte was assumed to have a volume as voids. In other words, from the density of the positive electrode mixture layer calculated by the above method, the density of the solid electrolyte was subtracted, and the resulting value was determined as the density of the positive electrode mixture layer of the present example. The calculation was performed on the assumption that the solid electrolyte had a density of 2.8 g/cm³.

### <Production of negative electrode>

The negative electrode of Example 6 was produced in the same manner as in Example 4.

### <Production of test cell>

In an insulating outer cylinder having an inner diameter of 9.4 mm, a layer formed of the positive electrode mixture powder and the negative electrode having ϕ0.92 cm produced in the above manner were disposed so that the negative electrode active material-containing layer side of the negative electrode would face the layer formed of the positive electrode mixture powder. The layer formed of the positive electrode mixture powder, a layer formed of the solid electrolyte Li₃YBr₄Cl₂ (80 mg), and the negative electrode were stacked so that the solid electrolyte would be disposed between the layer formed of the positive electrode mixture powder and the negative electrode active material-containing layer of the negative electrode. To the stack thus obtained, a pressure of 360 MPa was applied in the stacking direction. Thus, a battery serving as the test cell including a positive electrode, a solid electrolyte layer, and a negative electrode was formed. In the test cell, the positive electrode had a thickness of 22 µm, the solid electrolyte layer had a thickness of 400 µm, and the negative electrode had a thickness of 16.5 µm.

Subsequently, current collectors made of stainless steel were attached to the positive electrode and the negative electrode, and current collector leads were attached to the current collectors.

Lastly, an insulating ferrule was used to block the inside of the insulating outer cylinder from the outside air atmosphere to hermetically seal the cylinder.

### <Charge and discharge test>

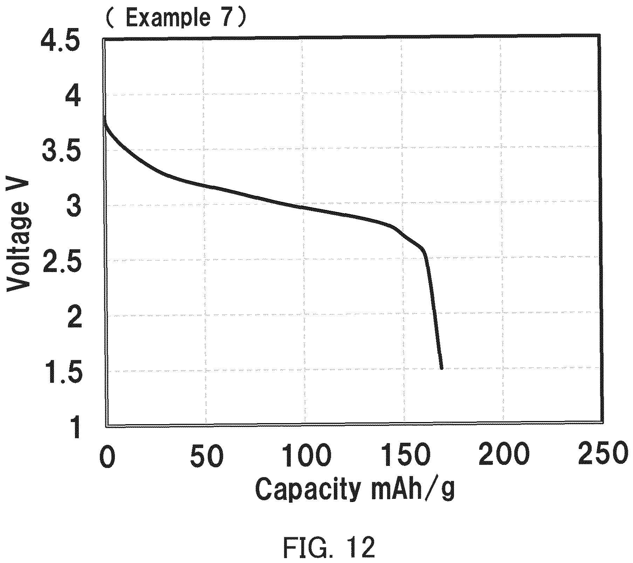

A charge and discharge test was performed on the test cell of Example 7 in the same manner as in Example 4. FIG. 12 is a graph of the results of the charge and discharge test on the test cell according to Example 7, showing the voltage during discharge and the discharge capacity per unit mass of the positive electrode active material. As shown in FIG. 12, the results of the charge test indicate that the test cell of Example 7 had a discharge capacity of 169.0 mAh/g per unit mass of the positive electrode active material. Moreover, the volumetric energy density, calculated by dividing the discharge capacity by the volume of the positive electrode, was 405.6 mAh/cm³.

### (Reference Example 2)

### <Production of solid electrolyte>

The solid electrolyte LYBC was produced in the same manner as in Example 4.

### <Production of positive electrode>

The positive electrode active material was produced in the same manner as in Reference Example 1.

The positive electrode was produced by using the above positive electrode active material. In an argon glove box, the positive electrode active material, the solid electrolyte LYBC, and carbon nanofiber VGCF (registered trademark) manufactured by SHOWA DENKO K.K. serving as the conductive additive were mixed to obtain a positive electrode mixture powder. The positive electrode active material, the solid electrolyte, and the conductive additive were mixed in a mass ratio of the positive electrode active material:the solid electrolyte:the conductive additive = 60:30:10.

The positive electrode mixture layer had a density of 2.4 g/cm³. The density was calculated in the same manner as in Example 4. In other words, for the layer formed of the positive electrode mixture powder, which will be described later in <Production of test cell> section, the density of the positive electrode mixture layer was calculated from the mass of the positive electrode mixture layer, the "mixture layer thickness" determined with an SEM, and the 9.4-mm inner diameter of the test cell. To conduct the density calculation under the same conditions as those for Examples 1 to 3 and Reference Example 1, the solid electrolyte was assumed to have a volume as voids. In other words, from the density of the positive electrode mixture layer calculated by the above method, the density of the solid electrolyte was subtracted, and the resulting value was determined as the density of the positive electrode mixture layer of the present example. The calculation was performed on the assumption that the solid electrolyte had a density of 2.8 g/cm³.

### <Production of negative electrode>

The negative electrode of Example 6 was produced in the same manner as in Example 4.

### <Production of test cell>

In an insulating outer cylinder having an inner diameter of 9.4 mm, a layer formed of the positive electrode mixture powder and the negative electrode having ϕ0.92 cm produced in the above manner were disposed so that the negative electrode active material-containing layer side of the negative electrode would face the layer formed of the positive electrode mixture powder. The layer formed of the positive electrode mixture powder, a layer formed of the solid electrolyte Li₃YBr₄Cl₂ (80 mg), and the negative electrode were stacked so that the solid electrolyte would be disposed between the layer formed of the positive electrode mixture powder and the negative electrode active material-containing layer of the negative electrode. To the stack thus obtained, a pressure of 360 MPa was applied in the stacking direction. Thus, a battery serving as the test cell including a positive electrode, a solid electrolyte layer, and a negative electrode was formed. In the test cell, the positive electrode had a thickness of 22 µm, the solid electrolyte layer had a thickness of 400 µm, and the negative electrode had a thickness of 16.5 µm.

Subsequently, current collectors made of stainless steel were attached to the positive electrode and the negative electrode, and current collector leads were attached to the current collectors.

Lastly, an insulating ferrule was used to block the inside of the insulating outer cylinder from the outside air atmosphere to hermetically seal the cylinder.

### <Charge and discharge test>

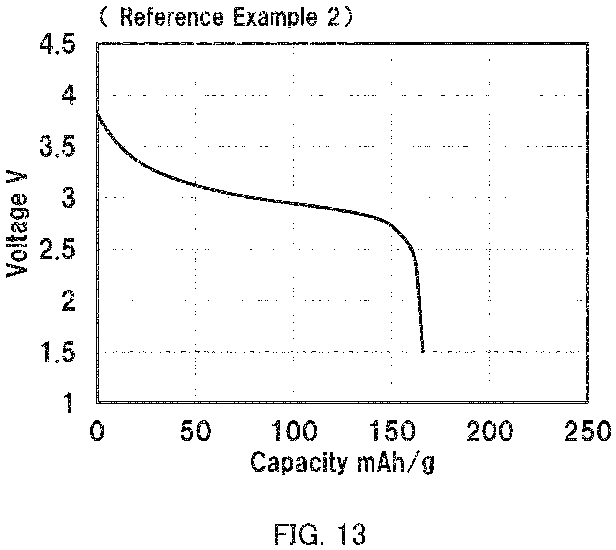

A charge and discharge test was performed on the test cell of Reference Example 2 in the same manner as in Example 4. FIG. 13 is a graph of the results of the charge and discharge test on the test cell according to Reference Example 2, showing the voltage during discharge and the discharge capacity per unit mass of the positive electrode active material. As shown in FIG. 13, the results of the charge test indicate that the test cell of Example 7 had a discharge capacity of 165.8 mAh/g per unit mass of the positive electrode active material. Moreover, the volumetric energy density, calculated by dividing the discharge capacity by the volume of the positive electrode, was 397.92 mAh/cm³.

The above results for the examples and reference examples are summarized in Table 2. In the table, "Negative electrode capacity/positive electrode capacity" indicates the value of the theoretical capacity (unit: mAh/g) of the negative electrode with respect to the theoretical capacity (unit: mAh/g) of the positive electrode. In other words, in the examples and reference examples, the negative electrode capacity was 1.3 times the positive electrode capacity. Moreover, in "Positive electrode" in Table 2, for the raw material used in the positive electrode active material production, namely, the Ni-Me composite hydroxide (e.g., [Ni_{0.60}Co_{0.20}Mn_{0.20}](OH)₂ in Example 1), "Ni ratio in active material" indicates the molar ratio (mol%) of Ni to Ni + Me.

As demonstrated by the above results for the examples and reference examples, it is possible to provide a battery that can have an enhanced volumetric energy density in the case where the positive electrode active material layer includes a composite oxide represented by LiₐNi_{b}Me_{c}O_{2d} as the positive electrode active material and the negative electrode active material layer includes an alloy including Bi and Ni as the negative electrode active material. In the above composition formula LiₐNi_{b}Me_{c}O_{2d}, a satisfies 0.8 ≤ a ≤ 1.2, b satisfies 0.5 ≤ b ≤ 1.0, c satisfies 0 ≤ c ≤ 0.6, d satisfies 0 < d, and Me is at least one selected from the group consisting of Mn, Co, and Al.

**[Table 2]**

| | Specification | Negative electrode | | Electrolyte solution/ Solid electrolyte | Positive electrode | | | |
|---|---|---|---|---|---|---|---|---|
| | | Active material | Active material density g/cm³ | | Active material type | Ni ratio in active material % | Coating | Mixture density g/cm³ |
| Example 1 | Flooded battery | BiNi | 107 | 1M LiPF6/VC | NCM | 60 | - | 2.4 |
| Example 2 | | BiNi | 107 | 1M LiPF6/VC | NCM | 80 | - | 2.5 |
| Example 3 | | BiNi | 107 | 1M LiPF6/EC:MEC=1:1 | NCA | 90 | - | 2.5 |
| Example 4 | All solid-state battery | BiNi | 107 | LYBC | NCM | 60 | - | 2.6 |
| Example 5 | | BiNi | 107 | S40 | NCM | 60 | - | 2.6 |
| Example 6 | | BiNi | 107 | LYBC | NCM | 80 | Nb | 2.7 |
| Example 7 | | BiNi | 107 | LYBC | NCA | 90 | - | 2.4 |
| Reference Example 1 | Flooded battery | BiNi | 107 | 1M LiPF6/VC | NCM | 34 | - | 2.4 |
| Reference Example 2 | All solid-state battery | BiNi | 107 | LYBC | NCM | 34 | - | 2.4 |

| | Negative electrode capacity/ positive electrode capacity | Voltage range | | Rate IT | Discharge capacity mAh/g (positive electrode active material weight basis) | | Positive electrode volumetric energy density mAh/cm³ | |
|---|---|---|---|---|---|---|---|---|
| | | Upper limit voltage V | Lower limit voltage V | | | | | |
| Example 1 | 1.3 | 3.9 | 1.5 | 0.05 | 196.1 | | 470.6 | |
| Example 2 | 1.3 | 3.9 | 1.5 | 0.05 | 203.2 | | 508.0 | |
| Example 3 | 1.3 | 3.9 | 1.5 | 0.05 | 188.5 | | 471.3 | |
| Example 4 | 1.3 | 3.9 | 1.5 | 0.05 | 186.5 | | 484.9 | |
| Example 5 | 1.3 | 3.9 | 1.5 | 0.05 | 173.2 | | 450.3 | |
| Example 6 | 1.3 | 3.9 | 1.5 | 0.05 | 200.4 | | 541.1 | |
| Example 7 | 1.3 | 3.9 | 1.5 | 0.05 | 169.0 | | 405.6 | |
| Reference Example 1 | 1.3 | 3.9 | 1.5 | 0.05 | 152.2 | | 365.3 | |
| Reference Example 2 | 1.3 | 3.9 | 1.5 | 0.05 | 165.8 | | 397.9 | |

### INDUSTRIAL APPLICABILITY

The battery of the present disclosure can be used as, for example, a lithium secondary battery.

## Claims

1. A battery comprising:
a positive electrode;
a negative electrode; and
an electrolyte layer positioned between the positive electrode and the negative electrode, wherein
the positive electrode includes a positive electrode active material layer,
the positive electrode active material layer includes a composite oxide represented by the following composition formula (1):
LiₐNi_{b}Me_{c}O_{2d} (1)
in the composition formula (1),
a satisfies 0.8 ≤ a ≤ 1.2,
b satisfies 0.5 ≤ b ≤ 1.0,
c satisfies 0 ≤ c ≤ 0.6,
d satisfies 0 < d, and
Me is at least one selected from the group consisting of Mn, Co, and Al,
the negative electrode includes a negative electrode current collector and a negative electrode active material layer, and
the negative electrode active material layer includes an alloy, the alloy including Bi and Ni.

2. The battery according to claim 1, wherein
the negative electrode active material layer includes BiNi.

3. The battery according to claim 2, wherein
the negative electrode active material layer includes the BiNi as a main component of an active material.

4. The battery according to claim 2 or 3, wherein
the BiNi has a monoclinic crystal structure of space group C2/m.

5. The battery according to any one of claims 1 to 4, wherein
the negative electrode active material layer includes at least one selected from the group consisting of LiBi and Li₃Bi.

6. The battery according to any one of claims 1 to 5, wherein
the negative electrode active material layer is free of a solid electrolyte.

7. The battery according to any one of claims 1 to 6, wherein
in an X-ray diffraction pattern of the negative electrode active material layer obtained by surface X-ray diffractometry using Cu-Kα radiation,
when a height intensity of a maximum peak present in a diffraction angle 2θ range from 29° to 31° is represented by I(1) and a height intensity of a maximum peak present in a diffraction angle 2θ range from 41° to 43° is represented by I(2),
a ratio I(2)/I(1) of the I(2) to the I(1) is 0.28 or less.

8. The battery according to any one of claims 1 to 7, wherein
the negative electrode current collector includes at least one selected from the group consisting of Cu and Ni.

9. The battery according to any one of claims 1 to 8, wherein
the negative electrode active material layer is a heat-treated plating layer.

10. The battery according to any one of claims 1 to 9, wherein
the electrolyte layer is a solid electrolyte layer.

11. The battery according to claim 10, wherein
the solid electrolyte layer includes a halide solid electrolyte, and
the halide solid electrolyte is free of sulfur.

12. The battery according to claim 10, wherein
the solid electrolyte layer includes a sulfide solid electrolyte.

13. The battery according to any one of claims 1 to 9, wherein
the electrolyte layer includes an electrolyte solution.

14. The battery according to any one of claims 1 to 13, wherein
in the composition formula (1), d satisfies 0.8 ≤ d ≤ 1.2.
